Europäisches Patentamt

European Patent Office

Office européen des brevets

(11) Publication number: **0 336 465**
A1

# EUROPEAN PATENT APPLICATION

(21) Application number: 89200574.5

(22) Date of filing: 08.03.89

(51) Int. Cl.4: **F16D 65/02** , **F16D 69/04** , **B61H 5/00**

(30) Priority: 31.03.88 IT 2101088 U

(43) Date of publication of application:
11.10.89 Bulletin 89/41

(84) Designated Contracting States:
AT BE CH DE ES FR GB GR LI LU NL SE

(71) Applicant: SO.C.I.MI.-Società Costruzioni
Industriali Milano S.p.A
Via Varesina 115
I-20156 Milan(IT)

(72) Inventor: Marzocco, Alessandro
Viale Monte Rosa 48
I-20149 Milan(IT)

(74) Representative: De Carli, Erberto et al
ING. BARZANO' & ZANARDO MILANO S.p.A.
Via Borgonuovo, 10
I-20121 Milano(IT)

(54) Friction shoe for brakes.

(57) Friction shoe (10) for brakes in which a base plate (11) is provided with plurality of seats (14) for housing friction elements (12) and with an element (15) which enables the plate to be fastened securely to the breaking system.

# Fig.1

EP 0 336 465 A1

## FRICTION SHOE FOR BRAKES

The present invention relates to a friction shoe for brakes.

Friction shoes for brakes are known, which are constituted by a plurality of elements assembled with one another by means of such jointing elements as riveting, welding, and the like. Said elements are suitable for constituting a base plate, on which the true braking elements are then fastened.

Such a type of brake shoe is affected by the drawback of being constituted by a too large number of pieces, and of easily undegoing fatigue phenomena, both as regards the fastening to the braking system, and the very large number of junctures which constitute it.

The purpose of the present invention is to provide a brake shoe which in the overall is more resistant, and is of a simpler structure.

In order to achieve such a purpose, according to the present invention a friction shoe for brakes is provided, which essentially comprises a base plate and friction elements, characterized in that said base plate is a shaped, monobloc plate bearing, on one of its faces, a plurality of seats for stably housing said friction elements, and being furthermore provided, on its other face, with an element which enables said plate to be fastened to the braking system.

The present invention is now disclosed for illustrative, non-limitative purposes, by referring to the figures of the hereto attached table in which:

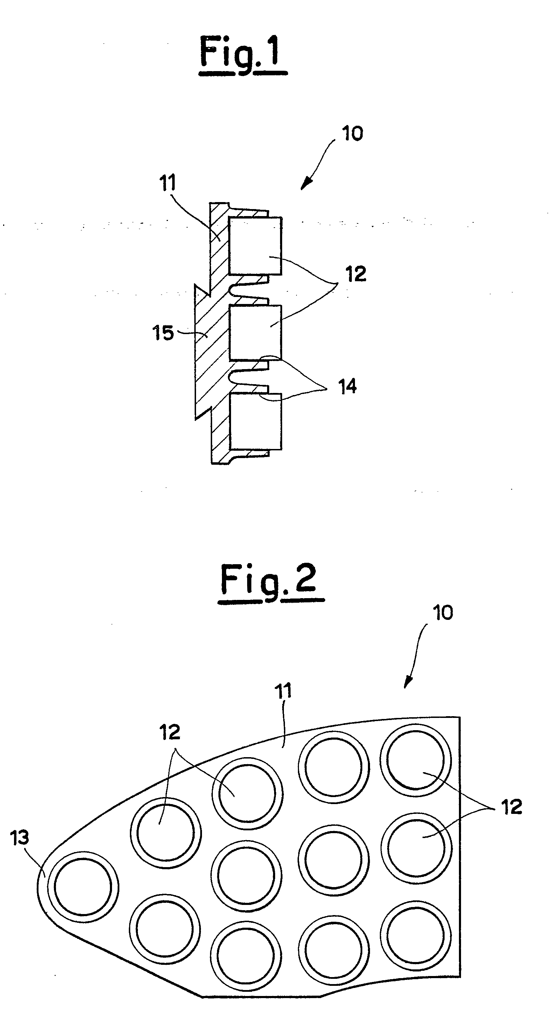

Figure 1 shows a sectional view of a friction shoe according to the present invention; and

Figure 2 shows a plan view of a face of the brake shoe of Figure 1.

Referring to the figures, by the reference numeral 10 a friction shoe according to the present invention is generally indicated, which is constituted by a monobloc base plate 11 on which friction elements 12 are fastened. The monobloc plate 11 has a shaped plan, taperd towards an end 13, and is provided, on one of its faces, with cylindrical seats 14 suitable for housing the respective friction elements 12. The seats 14 have furthermore a thickness increasing towards the joint region, in this way securing a higher resistance to the flexural stresses, and to the shear stresses, and simultaneously increasing the fatigue resistance of the whole unit.

On the other face of the plate 11, on the contrary, a dove-tail shaped element 15 is provided as a monobloc piece with the plate, which serves to accomplish a stable fastening of the whole friction shoe 10, as a unit, to a braking systen.

It should be understood that the friction shoe can be made from a large number of materials of most different kinds, according to the required characteristics, and furthermore that the seats, as well as the friction shoes can be given shapes different from the cylindrical shape.

Moreover, a further advantage of the friction shoe according to the present invention is that it can be realized with decidedly reduced costs, while simultaneously making it possible a higher reliability to be achieved, owing to the higher level of its technical characteristics.

## Claims

1. Friction shoe for brakes essentially comprising a base plate and friction elements, characterized in that said base plate is a shaped, monobloc plate bearing, on one of its faces, a plurality of seats for stably housing said friction elements, and being furthermore provided, on its other face, with an element enabling said plate to be fastened to the braking system.

2. Friction shoe according to claim 1, characterized in that said shaped, monobloc plate is tapered towards one of its end.

3. Friction shoe according to claim 1, characterized in that said fastening element is a dove-tail shaped element integral with said base plate by means of a joint surface area approximately equal to one half of the surface area of said plate.

4. Friction shoe according to one or more of the preceding claims, substantially as herein disclosed and illustrated.

# Fig.1

# Fig.2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 106 782 (ABEX CORP.) <br> * Page 3, line 19 - page 6, line 3; figures 1-11 * <br> ---- | 1-3 | F 16 D 65/02 <br> F 16 D 69/04 <br> B 61 H 5/00 |
| A | DE-U-8 514 607 (JURID WERKE GmbH) <br> * Figures 1-24 * <br> ---- | 1-3 | |
| A | CH-A- 118 284 (KIRCHBACH'SCHE WERKE KIRCHBACH) <br> * Whole document * <br> ---- | 1 | |
| A | EP-A-0 102 469 (KNORR-BREMSE GmbH) <br> * Figures 1-10 * <br> ---- | 1 | |
| A | FR-A-2 110 927 (BERGISCHE STAHL-INDUSTRIE) <br> * Figures 1-3 * <br> ---- | 1,3 | |
| A | FR-A-2 446 962 (B V T BERATUNGS-, VERWALTUNGS- UND TREUHANDGESELLSCHAFT mbH) <br> * figure 4 * <br> ---- | 1,3 | TECHNICAL FIELDS SEARCHED (Int. Cl.4) |
| A | FR-A-1 054 536 (S.A. DES CHAUDRONNERIES ET FONDERIES DE MARIEMONT) <br> * Whole document * <br> ---- | 1 | F 16 D 65/00 <br> F 16 D 69/00 <br> B 61 H 5/00 |
| A | FR-A- 319 510 (M. BIGOT) <br> * Whole document * <br> ---- | 1 | |
| A | FR-A- 968 598 (LA GARNITURE DE FREIN ET D'EMBRAYAGE) <br> * Whole document * <br> ---      -/- | 1 | |

The present search report has been drawn up for all claims

| Place of search | Date of completion of the search | Examiner |
|---|---|---|
| THE HAGUE | 06-07-1989 | BRAEMS C.G.I. |

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,P | FR-A-2 611 012 (VALEO) <br> * Page 3, line 12 - page 4, line 15; figures 1,2 * | 1-3 | |

TECHNICAL FIELDS
SEARCHED (Int. Cl.4)

The present search report has been drawn up for all claims

| Place of search | Date of completion of the search | Examiner |
|---|---|---|
| THE HAGUE | 06-07-1989 | BRAEMS C.G.I. |

EPO FORM 1503 03.82 (P0401)